Europäisches Patentamt

European Patent Office

Office européen des brevets

(19)

(11) EP 0 538 835 B1

(12) EUROPEAN PATENT SPECIFICATION

(45) Date of publication and mention
of the grant of the patent:
11.12.1996 Bulletin 1996/50

(51) Int Cl.6: G11B 21/00, G11B 21/10,
G11B 5/596, G11B 21/08

(21) Application number: 92118020.4

(22) Date of filing: 21.10.1992

(54) Recording and reproducing apparatus

Aufzeichnungs- und Wiedergabegerät

Appareil d'enregistrement et de reproduction

(84) Designated Contracting States:
DE FR GB

(30) Priority: 23.10.1991 JP 275724/91

(43) Date of publication of application:
28.04.1993 Bulletin 1993/17

(73) Proprietor: SONY CORPORATION
Tokyo (JP)

(72) Inventor: Ishida, Takehisa
Shinagawa-ku, Tokyo (JP)

(74) Representative: Körber, Wolfhart, Dr.rer.nat. et al
Patentanwälte
Mitscherlich & Partner,
Postfach 33 06 09
80066 München (DE)

(56) References cited:
EP-A- 0 083 170          US-A- 4 954 906

**Description**

BACKGROUND OF THE INVENTION

Field of the Invention:

The present invention generally relates to recording and reproducing apparatus and, more particularly, is directed to a recording and reproducing apparatus in which a recording head and a reproducing head are disposed on a rotary actuator with a constant distance therebetween.

Description of the Prior Art:

Apparatus for recording and reproducing a magneto-optical disc, a magnetic disc or the like employ a sector servo system, for example, as a detection system to detect the positions of a recording head and a reproducing head. A disc drive apparatus employing this sector servo system will be described below.

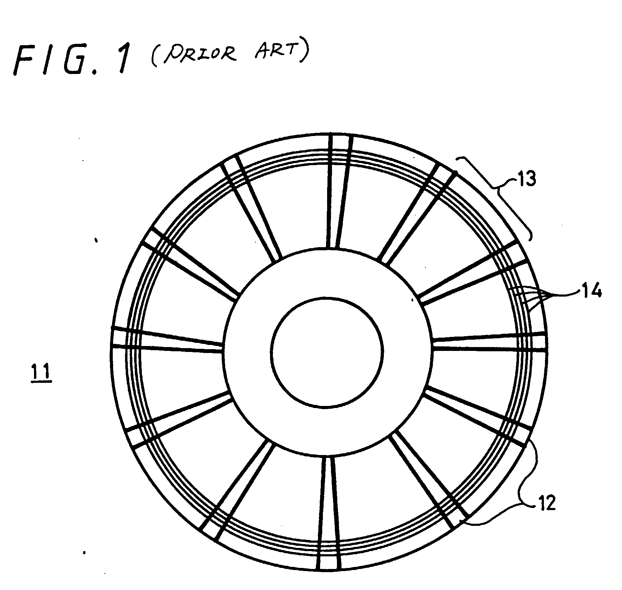

In the disc drive apparatus according to the sector servo system, as shown in FIG. 1 of the accompanying drawings, several sectors of substantially radial areas known as servo mark areas 12 are formed on a disc 11, in which position detecting marks are recorded. A position information is read out therefrom by a head that records and reproduces data. A recorded information and a position information are read out in a time-division manner, for example, and a recording and reproducing head is served also as a position information read-out sensor to detect a position error signal between the head and the recorded track. In FIG. 1, reference numeral 13 depicts a sector and 14 a track center.

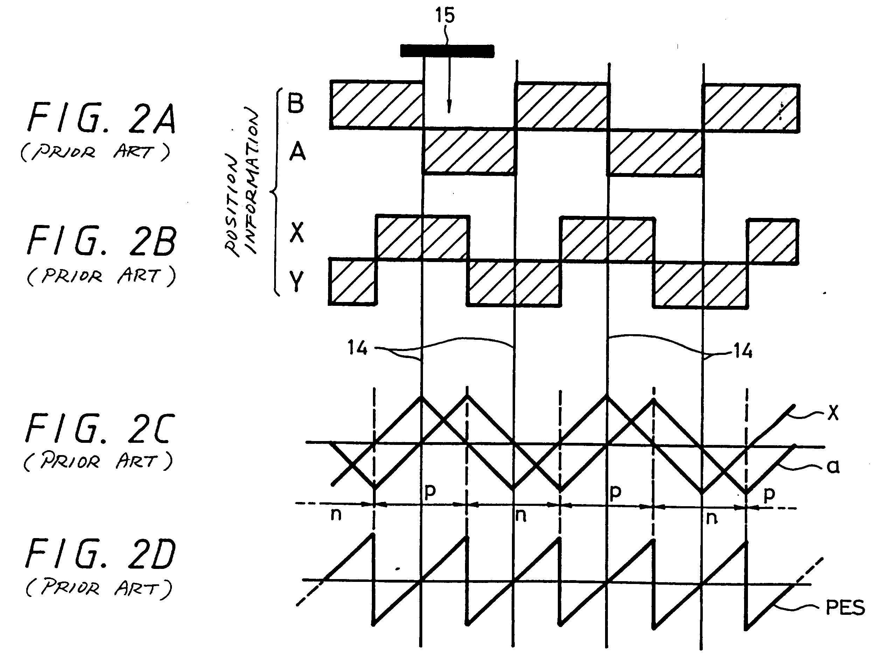

FIGS. 2A and 2B of the accompanying drawings show enlarged schematic plan views of an example of the servo mark area 12. In FIGS. 2A, 2B, signals A, B, X and Y depict position informations, respectively. In this example, the track center 14 is disposed at the position where a differences $S_A$ - $S_B$ between reproduced outputs $S_A$ and $S_B$ from the position detecting signals A, B which alternately provided in the servo mark areas 12 in a checker fashion becomes zero.

The position detecting signals X and Y, which are also disposed in a checker fashion, are disposed at the positions offset by half track pitch from the signals A, B in parallel to the signals A, B. The position detecting signals X, Y are used to prevent the polarity of a position error signal PES from being inverted at every track. When a difference $S_X$ - $S_Y$ (shown by a line x in FIG. 2C) between reproduced outputs $S_X$ and $S_Y$ obtained from the signals X and Y is positive, or a recording and reproducing head 15 is positioned within an area $\underline{p}$, a polarity of the above position detecting signal difference $S_A$ - $S_B$ shown by a line $\underline{a}$ in FIG. 2C is not inverted. Whereas, when the difference $S_X$ - $S_Y$ is negative, or the recording and reproducing head 15 is positioned within an area $\underline{n}$, the polarity of the position detecting signal difference $S_A$ - $S_B$ is inverted, thereby producing the position error signal PES, which can locate the recording and reproducing head 15 on the track center 14 constantly, as shown in FIG. 2D.

According to the above-mentioned method, since the position of the head that records and reproduces data is detected by the head itself, there is then the advantage such that the position can be detected with high accuracy. Further, since the head itself is served also as the position information read-out sensor, the arrangement of the disc drive apparatus can be simplified considerably.

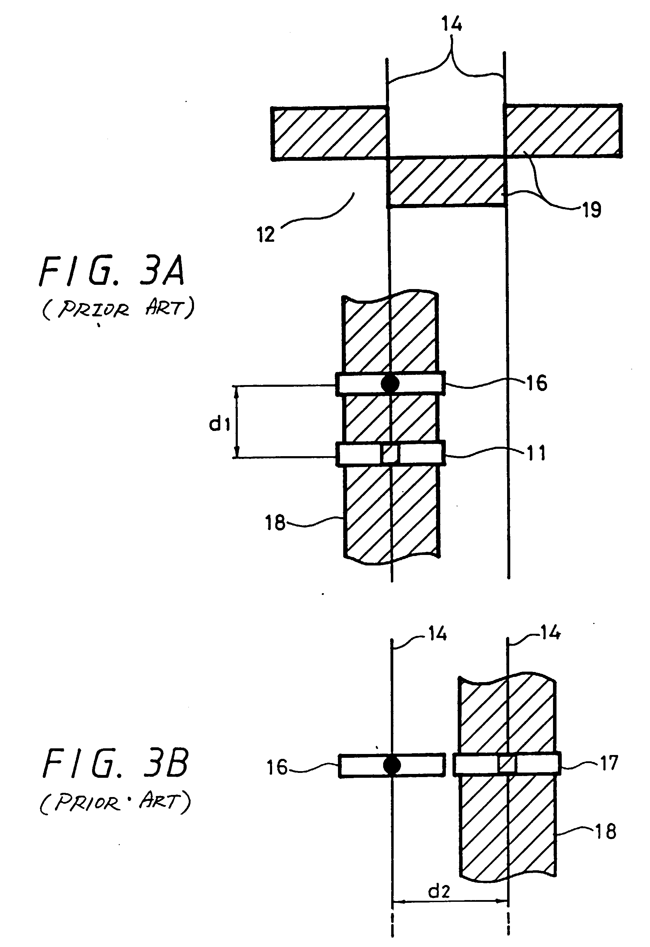

On the other hand, in order to improve recording and reproducing characteristics, it has been proposed to employ special heads for the recording and the playback, respectively. When the special heads are respectively utilized for the recording and the playback, it is generally very difficult to make a recording head gap and a playback head gap become coincident with each other completely. Accordingly, as shown in FIG. 3A or 3B, a constant distance $d_1$ or $d_2$ occurs between a reproducing head 16 and a recording head 17. FIG. 3A shows an example such that both head gaps are displaced in the longitudinal direction of the track and FIG. 3B shows an example such that both head gaps are displaced in the radial direction of the disc. The above-mentioned heads will be referred to as a two-gap head and the conventional recording and reproducing head will be referred to as a one-gap head in the description which follows.

Let it be assumed that the 2-gap head is controlled in tracking by the sector servo system and by the rotary actuator to thereby record and reproduce an information. When an information is recorded, the head position is detected by the reproducing head 16 on the servo mark area 12 on the basis of a position information 19. Then, a recording information 18 is recorded on data sectors by the recording head 17 while the rotary actuator (not shown) is controlled so that the center of the reproducing head 16 becomes coincident with the position of the track center 14. In the example shown in FIG. 3B, the spacing (distance) $d_2$ between the two heads 16 and 17 is made coincident with the spacing between the adjacent track centers 14, and the playback head 16 is moved by one track to read the recorded information 18.

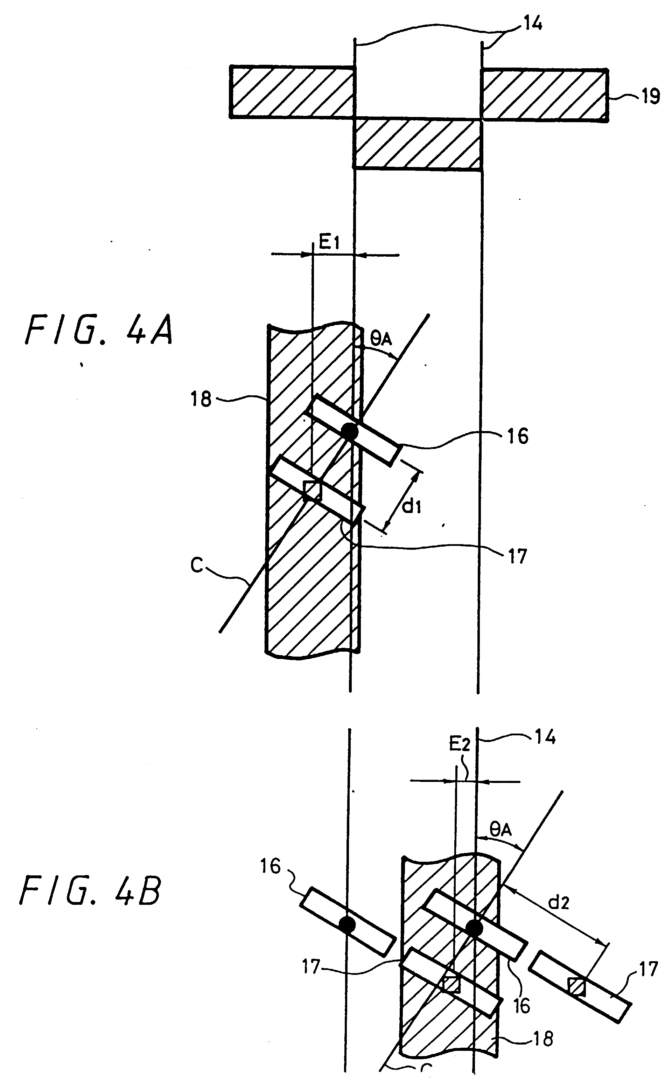

Considering the case such that the heads are disposed at an inclination angle of $\theta_A$ relative to the track center 14, as shown in FIGS. 4A and 4B, the reproducing head 16 and the recording head 17 are spaced apart so that the recording head 17 is disposed at positions distant from the position of the track center 14 read out from the position information 19 by the reproducing head 16 by distances $E_1$ and $E_2$ in the respective examples. As a consequence, the recording information 18 is recorded on the above displaced positions.

When on the other hand an information is played back, data is read out from the data sector by the reproducing head 16 which is being moved on the data sector at which the center of the reproducing head 16 may coincide with the track center 14. That is, although the center of the reproducing head 16 is coincident with the position at which the position information indicates the track center 14, the center of the track formed by the recording head 17 is distant from the position at which the position information indicates the track center 14 by the distance $E_1$ or $E_2$ as described above so that the recorded information cannot be reproduced efficiently, resulting in a reproduced output being lowered.

The above-mentioned problem is not limited to the recording and reproducing apparatus according to the above sector servo system and tends to occur because the recording head and the reproducing head are disposed at the positions spaced apart on the rotary actuator. Other recording and reproducing apparatus according to various read-out arrangements suffer from the above common problem.

OBJECTS AND SUMMARY OF THE INVENTION

Therefore, it is an object of the present invention to provide an improved recording and reproducing apparatus in which the aforesaid shortcomings and disadvantages encountered with the prior art can be eliminated.

More specifically, it is an object of the present invention to provide a recording and reproducing apparatus in which a tracking error, caused by the fact that a recording head and a reproducing head are mounted on a rotary actuator with a distance and changed in response to the rotation angle of the actuator, between the recording and reproducing modes can be avoided.

It is another object of the present invention to provide a recording and reproducing apparatus in which an accurate tracking can be effected.

It is still another object of the present invention to provide a recording and reproducing apparatus in which a reproduced output can be increased.

It is a further object of the present invention to provide a recording and reproducing apparatus in which a recording and reproducing efficiency can be improved.

It is yet a further object of the present invention to provide a recording and reproducing apparatus whose arrangement can be simplified.

As a first aspect of the present invention, there is provided a recording and reproducing apparatus in which a recording head and a reproducing head are secured on a rotary actuator with a constant distance therebetween. This recording and reproducing apparatus comprises a rotation angle detector for detecting a rotation angle of the rotary actuator, and a servo correction amount generator for generating a servo offset amount corresponding to the change of the rotation angle, wherein a servo offset based on the servo offset amount from the servo correction amount generator is supplied to the rotary actuator in such a fashion that at least in one of recording and reproducing modes a tracking error between the recording mode and the reproducing mode which takes place due to a distance between the recording head and the reproducing head and due to the rotation angle of the rotary actuator is canceled.

As a second aspect of the recording and reproducing apparatus according to present invention, a position of the rotary actuator is detected by the reproducing head.

The above and other objects, features, and advantages of the present invention will become apparent from the following detailed description of an illustrative embodiment thereof to be read in conjunction with the accompanying drawings, in which like reference numerals are used to identify the same or similar parts in the several views.

BRIEF DESCRIPTION OF THE DRAWINGS

FIG. 1 is a schematic plan view of a sector servo system disc according to the prior art;

FIGS. 2A through 2D are respectively explanatory diagrams showing an example of a servo mark area and signal waveforms;

FIGS. 3A and 3B are respectively diagrams used to explain the condition such that a signal is recorded and reproduced by a two-gap head;

FIGS. 4A and 4B are respectively diagrams used to explain the condition such that a signal is recorded and reproduced by also the two-gap head;

FIG. 5 is a diagram showing an arrangement of a recording and reproducing apparatus according to an embodiment of the present invention;

FIG. 6 is a diagram showing a circuit configuration of an example of a head position detector used in the present invention; and

FIG. 7 is a diagram used to explain a servo correction amount according to the present invention.

DETAILED DESCRIPTION OF THE PREFERRED EMBODIMENT

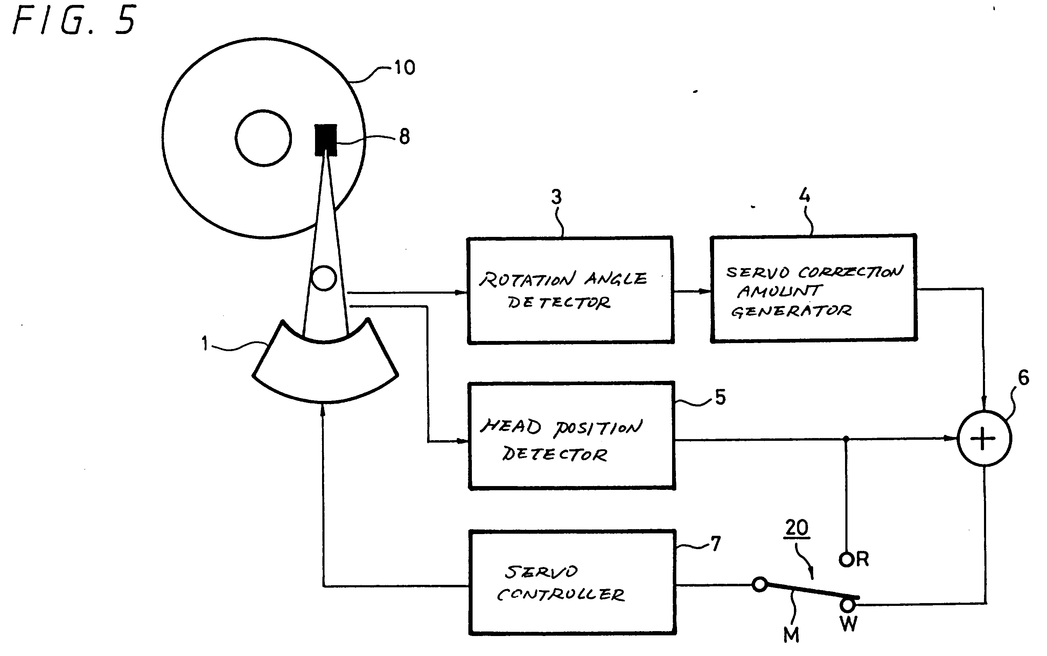

A recording and reproducing apparatus according to an embodiment of the present invention will now be described with reference to initially FIG. 5.

In this embodiment, a position detection is effected by a reproducing head and a servo offset amount is corrected upon recording. The recording head 16 and the reproducing head 17 (not shown in FIG. 5) are secured to a rotary actuator 1 with the constant distance $d_1$ or $d_2$ kept therebetween as shown in FIG. 3A or 3B, for example. In FIG. 5, reference numeral 10 depicts a recording medium such as a magnetic disc or the like. A rotation angle detector 3 is adapted to detect a rotation angle of the rotary actuator 1 and a servo correction amount generator 4 is adapted to generate a servo offset amount corresponding to the change of the rotation angle of the rotary actuator 1. At least in one of the recording and reproducing modes, i.e., upon recording in this case, the rotary actuator 1 is supplied with a servo offset such that a tracking error between the recording and reproducing modes which takes place due to the distance between the recording head 16 and the reproducing head 17 and due to the rotation angle of the rotary actuator 1 is canceled.

The rotation angle detector 3 might be formed of a rotary encoder attached to the rotary actuator 1, for example, or an up-down counter that detects the track number of the track on which the head is located.

As will be described later on, the servo correction amount generator 4 stores a servo offset amount, which has been obtained in advance by the calculation or experiment, in a read-only memory (ROM) and sequentially reads out the servo offset amount from the ROM by using the rotation angle of the actuator 1 as an address.

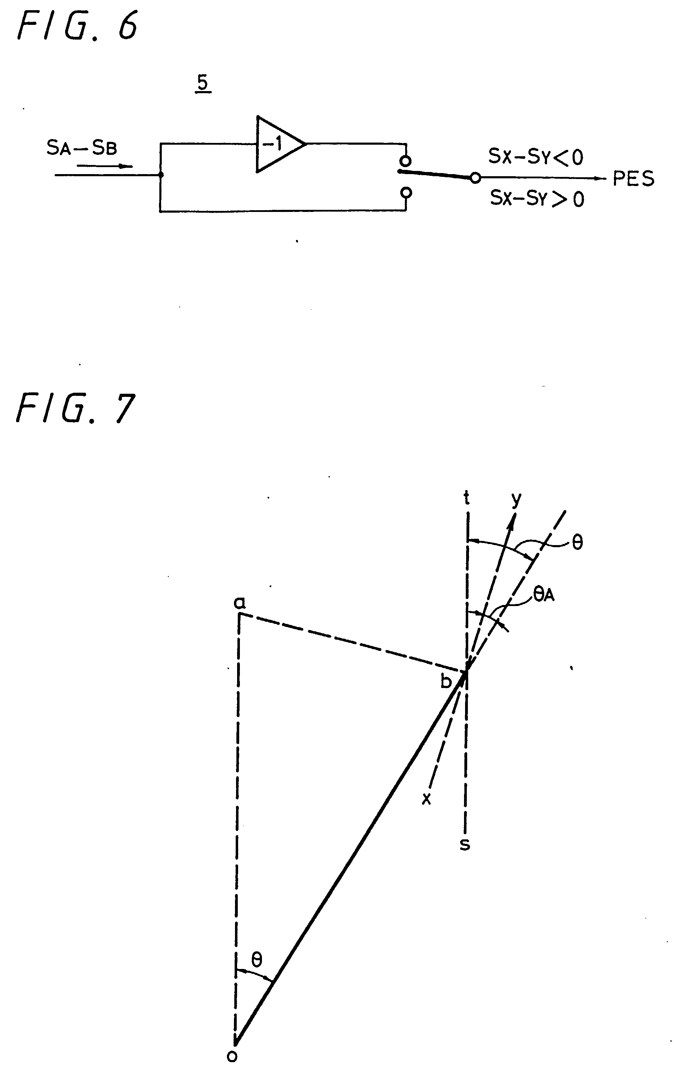

In FIG. 5, reference numeral 5 designates a head position detector. The head position detector 5 detects a position correction amount so as to correct a positional displacement between the reproducing head 16 and the track center 14 upon reproducing similarly to the conventional recording and reproducing apparatus. The head position detector 5 supplies a position correction amount to a servo controller 7 through a change-over switch 20. FIG. 6 of the accompanying drawings shows a diagram of an equivalent circuit of an example of the head position detector 5. In this case, as described hereinbefore with reference to FIGS. 2A through 2D, when the difference $S_X - S_Y$ is positive, the position information $S_A - S_B$ is output as it is, whereas when the difference $S_X - S_Y$ is negative, the polarity of the position information $(S_A - S_B)$ is inverted and hence a position information $- (S_A - S_B)$ is output.

In FIG. 5, reference symbol R designates a fixed contact of the change-over switch 20. Its movable contact M is connected to the fixed contact R in the playback mode.

Upon recording, the position correction amount is added with the servo offset amount caused by the distance between the recording head 16 and the reproducing head 17 and the rotation angle of the rotary actuator 1 and which corresponds to the positional displacement by an adder 6 and then fed to the servo controller 7 through the change-over switch 20. In FIG. 5, reference symbol W designates a fixed contact of the change-over switch 20 and its movable contact M is connected to the fixed contact W in the recording mode.

Let us now consider the servo amount by the positional displacement caused by the spacing between the recording head 16 and the reproducing head 17 and the rotation angle of the rotary actuator 1. In this case, the present invention is applied to a recording and reproducing apparatus using a so-called in-line type actuator wherein a distance from the rotation center of the rotary actuator to the recording and reproducing head and a distance from the rotation center of the actuator to the rotation center of the recording medium, e.g., disc are made equal to each other.

FIG. 7 of the accompanying drawings shows a positional relationship among the recording medium, e.g., disc, the actuator, the recording head and the reproducing head. In FIG. 7, reference symbol $\underline{o}$ designates a rotation center of the rotary actuator 1, $\underline{a}$ a rotation center of the disc and $\underline{b}$ a position of the recording and reproducing head when the rotation angle of the actuator 1 is $\theta$. A line st is a straight line that is extended in parallel to a line segment oa. A line xy indicates the longitudinal direction of the track at the head position $\underline{b}$. Since the line segment oa = line ob, calculating an angle $\theta_A$ formed by a straight line perpendicular to the head gap, i.e., the extending direction of the rotary actuator 1 and the extending direction of the track yields:

$$\theta_A = \angle obx = \angle abx - \angle abo$$

$$= 90° - (180° - \theta)/2 = \theta/2$$

Accordingly, when the reproducing head 16 and the recording head 17 are secured on the rotary actuator 1 with a displacement of the spacing $d_1$ in the longitudinal direction of the track as earlier noted with reference to FIGS. 3A and 4A, then the tracking error amount $E_1$ between the two recording and reproducing heads 16 and 17 when the rotation angle of the actuator 1 is $\theta$ is expressed as:

$$E_1 = d_1 \sin\theta_A$$

$$= d_1 \sin(\theta/2)$$

When on the other hand the reproducing head 16 and the recording head 17 are secured on the rotary actuator 1 with a displacement of the spacing $d_2$ that corresponds to the spacing of one track in the radial direction of the disc as earlier noted with reference to FIGS. 3B and 4B, then the tracking error amount $E_2$ is expressed as:

$$E_2 = d_2 - d_2 \cos\theta_A$$

$$= d_2 (1 - \cos(\theta/2))$$

If the servo correction amount generator 4 is constructed so that the servo offset amount is generated in accordance with these functions, then the positional displacement can be prevented from taking place between the recording mode and the reproducing mode. Hence, the tracking with high accuracy can be effected. Therefore, the reproduced output can be increased.

While the head position is detected by the read-out operation of the playback head in the above recording and reproducing apparatus according to the present invention, the present invention is not limited thereto and may be applied to the case such that other position detecting means are separately provided. However, if the head position is detected by the reproducing head as described above, then some special position detecting means need not be provided, which can simplify the arrangement of the recording and reproducing apparatus.

The recording and reproducing apparatus according to the present invention is not limited to the recording and reproducing apparatus that records and reproduces the magnetic disc and may be applied to recording and reproducing apparatus which can record and reproduce a wide variety of record medium such as an optical disc, a magneto-optical disc, etc.

As set out above, according to the recording and reproducing apparatus of the present invention, the tracking error can be canceled between the recording mode and the reproducing. Hence, accurate tracking can be effected. Also, the reproduced output can be increased, which as a result can improve a recording and reproducing efficiency.

Furthermore, since the head position is detected by the playback head, the arrangement of the recording and reproducing apparatus can be simplified.

Having described a preferred embodiment of the invention with reference to the accompanying drawings, it is to be understood that the invention is not limited to that precise embodiment and that various changes and modifications could be effected by one skilled in the art without departing from the scope of the invention as defined in the appended claims.

## Claims

1. A data recording and reproducing apparatus in which a data recording head (16) and a data reproducing head (17) are secured on an in-line type rotary actuator (1) with a constant distance ($d_1$ or $d_2$) therebetween, characterized by:

    a) a rotation angle detector (3) for detecting a rotation angle ($\theta$) of said rotary actuator (1); and
    b) a servo correction amount generator (4) for generating a servo offset amount corresponding to the change of said rotation angle, wherein a servo offset based on said servo offset amount from said servo correction amount generator (4) is supplied to said rotary actuator (1) in such a fashion that at least in one of recording and reproducing modes a tracking error between the recording mode and the reproducing mode which takes place due to a distance between said recording head (16) and said reproducing head (17) and due to the rotation angle of said rotary actuator (1) is canceled.

2. The recording and reproducing apparatus according to claim 1, wherein a position of said rotary actuator (1) is detected by said reproducing head (17).

## Patentansprüche

1. Datenaufzeichnungs und -wiedergabegerät bei dem ein Datenaufzeichnungskopf (16) und ein Datenwiedergabekopf (17) auf einem Drehantrieb (1) vom "in-line"- Typ mit einem festen Abstand ($d_1$ oder $d_2$) dazwischen befestigt sind, gekennzeichnet durch:

    a) einen Drehwinkeldetektor (3), um einen Drehwinkel ($\Theta$) des Drehantriebs (1) zu erfassen, und
    b) einen Servo-Korrekturgrößengenerator (4), um eine Servo-Beaufschlagungsgröße zu erzeugen, die der Änderung des Drehwinkels entspricht, wobei eine Servo-Beaufschlagung, die auf der Servo-Beaufschlagungsgröße beruht, von dem Servo-Korrekturgrößengenerator (4) dem Drehantrieb (1) in der Weise zugeführt wird, daß zumindest bei einem aus den Aufzeichnungs- und der Wiedergabemodi ein Spurfehler zwischen dem Aufzeichnungsmodus und dem Wiedergabemodus beseitigt ist, der aufgrund des Abstandes zwischen dem Aufzeichnungskopf (16) und dem Wiedergabekopf (17) und aufgrund des Drehwinkels des Drehantriebs (1) auftritt.

2. Aufzeichnungs- und Wiedergabegerät nach Anspruch 1, bei dem eine Lage des Drehantriebs (1) vom Wiedergabekopf (17) erfaßt wird.

## Revendications

1. Appareil d'enregistrement et de reproduction des données dans lequel une tête (16) d'enregistrement des données et une tête (17) de reproduction des données sont fixées sur un actionneur rotatif (1) du type en-ligne avec une distance constante ($d_1$ ou $d_2$) entre elles, caractérisé par:

    a) un détecteur (3) d'angle de rotation pour détecter un angle de rotation ($\theta$) dudit actionneur rotatif (1); et
    b) un générateur (4) de la valeur de la correction à effectuer par un servocircuit pour générer une valeur de décalage à effectuer par un servocircuit correspondant au changement dudit angle de rotation, appareil dans lequel un décalage à effectuer par le servocircuit, sur la base de ladite valeur de décalage à effectuer par le servocircuit fournie par ledit générateur (4) de la valeur de correction à effectuer par le servocircuit est envoyé audit actionneur rotatif (1) de façon qu'au moins dans l'un des modes d'enregistrement et de reproduction soit annulée une erreur de suivi entre le mode d'enregistrement et le mode de reproduction, provoquée par la distance entre ladite tête d'enregistrement (16) et ladite tête de reproduction (17) et par l'angle de rotation dudit actionneur rotatif (1).

2. Appareil d'enregistrement et de reproduction suivant la revendication 1, dans lequel la position dudit actionneur rotatif (1) est détectée par ladite tête de reproduction (17).

FIG. 1 (PRIOR ART)

FIG. 2A
(PRIOR ART)

FIG. 2B
(PRIOR ART)

FIG. 2C
(PRIOR ART)

FIG. 2D
(PRIOR ART)

POSITION INFORMATION

B

A

X

Y

15

14

14

X

a

n    p    n    p    n    p

PES

EP 0 538 835 B1

14

12

19

# FIG. 3A
## (PRIOR ART)

16

d1

11

18

14    14

# FIG. 3B
## (PRIOR ART)

16

17

18

d2

FIG. 4A

FIG. 4B

# FIG. 5

EP 0 538 835 B1

## FIG. 6

5

SA—SB

−1

SX−SY<0

SX−SY>0

PES

## FIG. 7